# EUROPÄISCHE PATENTSCHRIFT

(11) **EP 3 521 658 B1**
(45) Veröffentlichungstag und Bekanntmachung des Hinweises auf die Patenterteilung: **12.01.2022**
(21) Anmeldenummer: 19152110.3
(22) Anmeldetag: 16.01.2019
(51) Int. Cl.: F16G 13/06

(54) **ENDLOSLAUFMITTEL, VORRICHTUNG UND VERWENDUNG DERSELBEN**
ENDLESS STRIP, DEVICE AND THEIR USE
MOYEN DE PASSAGE EN CONTINU, SON DISPOSITIF ET SON UTILISATION

(30) Priorität: 31.01.2018 DE 102018102196
(43) Veröffentlichungstag der Anmeldung: 07.08.2019
(73) Patentinhaber: Lehner, Peter, 82285 Haspelmoor (DE)
(72) Erfinder: Lehner, Peter, 82285 Haspelmoor (DE)
(74) Vertreter: Spengler, Robert

(56) Entgegenhaltungen:
- US-A- 123 448

## Beschreibung

Die vorliegende Erfindung betrifft ein Endloslaufmittel mit einer Innenseite bzw. Innenfläche und einer Außenseite bzw. Außenfläche, das um zwei um jeweilige voneinander beabstandete und zueinander im Wesentlichen parallel ausgerichtete Drehachsen drehbar gelagerte Umlenkrollen schlingbar ist, wobei jeweilige gekrümmte Teilabschnitte des Endloslaufmittels mit der Innenseite an Umfangsflächen der Umlenkrollen anliegen und das Endloslaufmittel bei Drehen der Umlenkrollen im selben Drehsinn die Umlenkrollen umläuft. Ferner betrifft die Erfindung eine Vorrichtung mit wenigstens einem derartigen Endloslaufmittel sowie eine Verwendung einer derartigen Vorrichtung.

Es ist bekannt, Endloslaufmittel wie zum Beispiel Ketten, Riemen oder Bänder zur Übertragung von Kräften und Bewegungen einzusetzen. Dabei sind technische Ketten mit unterschiedlich ausgebildeten Kettengliedern sowie Riemen mit unterschiedlichen Querschnitten bekannt. Zudem sind aus verschiedenen Materialien gefertigte Endloslaufmittel bekannt.

So ist beispielsweise in der US 123,448 ein Endloslaufmittel offenbart, das um zwei um jeweilige voneinander beabstandete und zueinander im Wesentlichen parallel ausgerichtete Drehachsen drehbar gelagerte Umlenkrollen geschlungen ist. Das Endloslaufmittel weist Scharniere auf, mit denen Lastbügel derart angelenkt sind, dass sie bei Einwirken äußerer Kräfte wechselweise einen eingeklappten und einen ausgeklappten Zustand einnehmen. Bezüglich eines vorgegebenen Umlaufsinns entlang des Endloslaufmittels erstrecken sich die Lastbügel im eingeklappten Zustand von den jeweiligen Scharnieren aus in gleicher Richtung.

Es ist die Aufgabe der vorliegenden Erfindung, ein Endloslaufmittel, eine Vorrichtung und eine Verwendung für eine Vorrichtung zu schaffen, mit denen sich auf einfache und praktische Weise Kräfte in nutzbringende Bewegungen umwandeln lassen.

Diese Aufgabe wird durch das Endloslaufmittel mit den Merkmalen des Anspruchs 1, durch die Vorrichtung mit den Merkmalen des Anspruchs 5 und durch die Verwendung mit den Merkmalen des Anspruchs 9 gelöst. Bevorzugte Ausführungsformen sind Gegenstand der abhängigen Ansprüche.

Ein Endloslaufmittel gemäß der vorliegenden Erfindung weist wenigstens zwei Lastbügel auf, von denen jeder jeweils einen kürzeren ersten Schenkel mit einem an der Außenseite an einer jeweiligen Befestigungsposition angelenkten ersten Ende und einem jeweiligen dem ersten Ende entgegengesetzten zweiten Ende sowie einen sich vom zweiten Ende erstreckenden und mit dem ersten Schenkel einen jeweiligen Winkel einschließenden jeweiligen längeren zweiten Schenkel aufweist. Die Lastbügel sind dazu eingerichtet, bei Einwirken äußerer Kräfte wechselweise einen eingeklappten Zustand, in welchem ein vom ersten Schenkel abgewandter Endabschnitt des zweiten Schenkels der Außenseite zugewandt ist, und einen ausgeklappten Zustand einzunehmen, in welchem der Endabschnitt von der Außenseite abgewandt ist. Im eingeklappten Zustand erstrecken sich die zweiten Schenkel beider Lastbügel bezüglich eines vorgegebenen Umlaufsinns entlang des Endloslaufmittels in gleicher Richtung vom ersten Schenkel aus. Ferner ist das Endloslaufmittel zwischen den Befestigungspositionen der Lastbügel sowohl im Umlaufsinn als auch gegen den Umlaufsinn im Wesentlichen gleich lang. Sofern das Endloslaufmittel die Umlenkrollen bzw. Umlaufrollen umschlingt und sich beide Umlenkrollen im selben Drehsinn drehen, so dass das Endloslaufmittel die Umlenkrollen umläuft, durchstoßen beide Befestigungspositionen infolgedessen eine durch die Drehachsen definierte Ebene im Wesentlichen zeitgleich und mit einander entgegen gerichteten Bewegungsmomenten oder Geschwindigkeiten. Außer beim Durchstoßen dieser Ebene durch die Befestigungspositionen befinden sich beide Lastbügel zu jeder Zeit bzw. in jeder Drehposition des Endloslaufmittels auf verschiedenen Seiten der Ebene. Vorzugsweise weist das Endloslaufmittel mehr als zwei bzw. mehrere derartiger Lastbügel auf, die vorteilhaft gleichmäßig entlang des gesamten Endloslaufmittels verteilt sind, wobei sich zweite Schenkel aller Lastbügel im eingeklappten Zustand bezüglich eines vorgegebenen Umlaufsinns entlang des Endloslaufmittels in gleicher Richtung vom ersten Schenkel aus erstrecken.

Das vorzugsweise unter einer Spannung um die Umlenkrollen geschlungene Endloslaufmittel kann verschiedenen an den Lastbügeln angreifenden äußeren oder externen Kräften ausgesetzt sein. Vorzugsweise weist die externe Kraft dabei eine parallel zu der durch die Drehachsen definierten Ebene orientierte Wirkungslinie auf oder es weist wenigstens eine Komponente der externen Kraft eine derart orientierte Wirkungslinie auf. Beispielsweise kann das Endloslaufmittel ganz oder teilweise innerhalb eines fließenden Fluids wie zum Beispiel einem Flüssigkeits-, Wasser-, Luft- oder Gasstrom angeordnet sein, welches beim Vorbeiströmen eine äußere Kraft an den Lastbügeln bewirkt. Andererseits kann bei einer Anordnung der erfindungsgemäßen Vorrichtung, in welcher beide Drehachsen in vertikaler Richtung übereinander angeordnet oder gestaffelt sind, eine an den Lastbügeln angreifende äußere Kraft auch einfach durch die Schwerkraft bedingt sein, ohne dass hierfür ein vorbeifließendes Fluid auf die Lastbügel einwirkt.

Aufgrund der erfindungsgemäßen Ausgestaltung und Anordnung der Lastbügel am Endloslaufmittel gehen bei Einwirken einer solchen externen Kraft auf in einer Orientierung befindliche Lastbügel, in der sich der zweite Schenkel in der Wirkungsrichtung der externen Kraft vom ersten Schenkel erstreckt, in den eingeklappten Zustand über oder verbleiben im eingeklappten Zustand, da die externe Kraft infolge ihrer Wirkungsrichtung sich im eingeklappten Zustand befindliche Lastbügel nicht in den ausgeklappten Zustand zu überführen vermag. Dabei kann ein Lastbügel im eingeklappten Zustand mit dem vom kürzeren Schenkel abgewandten Endabschnitt seines längeren Schenkels an der Außenseite des Endlosbandes anliegen oder von dieser beabstandet sein. Andererseits gehen in einer Orientierung befindliche Lastbügel, in der sich der zweite Schenkel gegen die Wirkungsrichtung der externen Kraft vom ersten Schenkel erstreckt, in den ausgeklappten Zustand über oder verbleiben im ausgeklappten Zustand. Ein sich im ausgeklappten Zustand befindlicher Lastbügel liegt oder stößt mit seinem kurzen ersten Schenkel an der Außenfläche des Endlosbandes an, da er infolge des Einwirkens der externen Kraft und seiner drehbaren Befestigung mit dem ersten Schenkel gegen die Außenfläche gedrückt wird und wegen der Wirkungsrichtung dieser Kraft auch nicht in den eingeklappten Zustand übergehen kann.

Da sich die zweiten Schenkel beider Lastbügel im eingeklappten Zustand bezüglich eines vorgegebenen Umlaufsinns entlang des Endloslaufmittels in gleicher Richtung erstrecken, und da sich ferner außer beim Durchstoßen der durch die Drehachsen aufgespannten Ebene durch die Befestigungspositionen beide Lastbügel zu jeder Zeit bzw. in jeder Drehposition des Endloslaufmittels auf verschiedenen Seiten dieser Ebene befinden, nimmt einer der Lastbügel bei Vorhandensein von auf beiden Seiten der Ebene wirkenden externen Kräften den eingeklappten Zustand ein, während der sich auf der anderen Seite der Ebene befindliche andere Lastbügel den ausgeklappten Zustand einnimmt. Während des Durchstoßens der Ebene durch die Befestigungspositionen wechseln beide Lastbügel ihre Zustände, d.h. der sich im eingeklappten Zustand befindliche Lastbügel geht in den ausgeklappten Zustand über und der sich im ausgeklappten Zustand befindliche Lastbügel geht in den eingeklappten Zustand über.

Weil ferner bei beiden Lastbügeln der zweite Schenkel länger ist als der erste Schenkel bzw. vorzugsweise um ein vielfaches länger ist als der erste Schenkel, wird vom sich im ausgeklappten Zustand befindlichen Lastbügel in Verbindung mit der an den Lastbügeln angreifenden äußeren Kraft eine vielfach größere Hebelwirkung auf das Endloslaufmittel und über dieses auf die Umlenkrollen ausgeübt als vom sich im eingeklappten Zustand befindlichen Lastbügel. Anders ausgedrückt wird beim Umrunden einer Umlenkrolle durch die Lastbügel bzw. beim Übergang der Lastbügel vom eingeklappten Zustand in den ausgeklappten Zustand eine Lastverschiebung erzeugt. Dabei erreicht der Schwerpunkt des Lastbügels bzw. der Ballast des Endloslaufmittels einen größeren Radius als der Drehpunkt des Lastbügels und erzeugt damit mehr Kraft an der Befestigungsposition als benötigt wird, um ein Gleichgewicht des Endloslaufmittels zu erzeugen. Diese größere Hebelwirkung oder Differenz der Hebelwirkungen bzw. dieses mehr an Kraft bewirkt nun, dass das Endloslaufmittel die Umlenkrollen beschleunigt umläuft bzw. von der äußeren Kraft angetrieben wird. Mittels bekannter geeigneter Vorrichtungen, die zum Beispiel Getriebe, hydraulische oder pneumatische Zylinder umfassen, kann diese Bewegung von der erfindungsgemäßen Vorrichtung abgeführt und genutzt werden.

Bei dem Endloslaufmittel kann es sich grundsätzlich um eine Endloskette mit mehreren Kettengliedern oder um einen Endlosriemen oder um ein flaches Endlosband handeln, bzw. es kann sich bei dem Endloslaufmittel um eine geschlossene Kette oder einen geschlossenen Riemen oder ein geschlossenes Band handeln. Zudem kann das Endloslaufmittel aus verschiedenen Materialien gefertigt sein. Beispielsweise können einzelne oder alle Kettenglieder einer Endloskette ganz oder teilweise aus Metall oder aus Kunststoff oder sogar aus Holz hergestellt sein. Ein Endlosriemen kann ebenfalls ganz oder teilweise aus Kunststoff oder aber aus Leder oder einem Gewebe hergestellt oder geflochten sein. Auch ein Endlosband kann ganz oder teilweise aus Kunststoff hergestellt sein, wobei das Endlosband insbesondere auch aus Gewebe aus einem Kunststoff oder aus Stoff bestehen oder geflochten sein kann.

Besonders bevorzugt weist das Endloslaufmittel Kettenglieder auf, die einen quaderförmigen ersten Endabschnitt sowie einen Endabschnitt mit einer runden Ausnehmung aufweisen, deren Fläche einen Teilabschnitt der Innenseite der Endloslaufmittels bildet. Infolge des quaderförmigen ersten Endabschnitts werden rechtwinklige Einzelglieder erreicht, die nur an einer Seite beweglich und an der anderen Seite eine Versteifung erzeugen, wobei die biegesteife Seite Gegendrücke aufnimmt. Die eigene Zugkraft der Kettenglieder verhindert eine Bewegung an den Fugen. Dies bewirkt, dass die Kette, in gerader Ausrichtung, zu einem tragfähigen Kettenbalken wird und bei der Umdrehung an der Umlenkrolle wie eine kräftige und bewegliche Kette wirkt. Eine Durchbiegung in der Gesamtlänge ergibt sich deshalb nur noch aus der möglichen Elastizität des Materials.

Bevorzugt ist wenigstens einer der vom ersten Schenkel abgewandten Endabschnitte schaufelartig ausgebildet, beispielsweise als schaufelartige Vertiefung. Eine derartige Vertiefung ist insbesondere beim Einsatz des Endloslaufmittels in Verbindung mit einem Fluid von Vorteil, da dem Fluid dadurch eine größere Angriffs- oder Wirkungsfläche geboten wird und die infolge des Fluids auf den Lastbügel ausgeübte Kraft effektiver am Lastbügel angreifen kann. Ferner kann wenigstens einer der Endabschnitte mit wenigstens einem Gewichtskörper versehen sein. Infolge des Gewichtskörpers wird die Wirkung der Schwerkraft als externer Kraft auf den Lastbügel und damit auf das Endloslaufmittel insgesamt vergrößert.

Eine Vorrichtung mit wenigstens einem Endloslaufmittel gemäß der vorliegenden Erfindung weist wenigstens zwei Umlenkrollen auf, um welche das Endloslaufmittel geschlungen ist. Darüber hinaus kann eine erfindungsgemäße Vorrichtung auch mehr als zwei vom Endloslaufmittel umschlungene Umlenkrollen aufweisen. Bei wenigstens einer oder bei zwei oder mehreren Umlenkrollen kann es sich um eine scheibenförmige Rolle handeln, deren Höhe kleiner ist als ein Radius und/oder als ein Durchmesser einer Grundfläche der Rolle. Andererseits kann es sich bei wenigstens einer oder bei zwei oder mehreren Umlenkrollen um eine zylinderförmige Rolle oder einen Zylinder oder eine Welle oder eine Walze handeln, deren Höhe größer ist als ein Radius und/oder als ein Durchmesser einer Grundfläche der Rolle. Zudem können Umlenkrollen auf drehbar gelagerten Wellen oder Walzen angeordnet sein.

Vorteilhafterweise sind bei einer erfindungsgemäßen Vorrichtung wenigstens zwei oder mehrere Endloslaufmittel entlang der Drehachsen gestaffelt um die Umlenkrollen geschlungen, wobei sich die zweiten Schenkel aller Lastbügel aller Endloslaufmittel im eingeklappten Zustand bezüglich desselben vorgegebenen Umlaufsinns in gleicher Richtung erstrecken. Zwei oder mehrere entlang der Drehachsen gestaffelt um die Umlenkrollen geschlungene Endloslaufmittel bieten äußere Kräfte eine Mehrzahl an Angriffsmöglichkeiten was sich in einer entsprechend größeren Beschleunigung des Endloslaufmittels äußert. Insgesamt sind derartig ausgeführte Vorrichtungen im Vergleich zu einer Vorrichtung mit nur einem Endloslaufmittel wesentlich effektiver.

Bei einer weiteren bevorzugten Ausführung weist die Vorrichtung wenigstens ein Brems- oder Steuermittel auf, das zum Bremsen oder Steuern einer Bewegung der Umlenkrollen und/oder des Endloslaufmittels eingerichtet ist. Derartige Brems- oder Steuermittel können beispielsweise hydraulische oder pneumatische Zylinder sowie Getriebe aufweisen. Ein solches Brems- oder Steuermittel kann einerseits verhindern, dass eine Bewegung des Endloslaufmittels bzw. der Umlenkrollen infolge der externen Kraft zu stark und die Vorrichtung dadurch beschädigt wird. Andererseits ist mittels eines derartigen Brems- oder Steuermittels eine kontrollierte Abführung der Bewegung bzw. von Energie bzw. Kraft von der Vorrichtung zu deren technischer Nutzung möglich.

Es sind Ausführungsformen der Vorrichtung möglich, bei denen wenigstens zwei Umlenkrollen gleiche Durchmesser aufweisen. Um solche Umlenkrollen geschlungene Endloslaufmittel weisen in der Regel zwei gerade und zueinander parallele Teilabschnitte auf, wobei die Innenflächen dieser Teilabschnitte einander zugewandt ist. Bei anderen Ausführungsformen der Vorrichtung weisen wenigstens zwei Umlenkrollen hingegen unterschiedliche Durchmesser auf. Um derartige Umlenkrollen geschlungene Endloslaufmittel weisen ebenfalls gerade Teilabschnitt auf, die jedoch in einem Winkel zueinander stehen können.

Wenigstens eine erfindungsgemäße Vorrichtung kann derart verwendet werden, dass gleichgerichtete äußere Kräfte an den zweiten Schenkeln angreifen und das Endloslaufmittel sowie die Umlenkrollen in Bewegung versetzen, wobei diese Bewegung oder Energie von der Vorrichtung abgeführt wird. Zur Abführung der Bewegung oder Energie von der Vorrichtung sind an sich bekannte Einrichtungen wie zum Beispiel Getriebe einsetzbar.

Grundsätzlich kann die die Vorrichtung in einer Anordnung mit im Wesentlichen senkrecht oder waagerecht stehenden und in horizontaler oder in vertikaler Richtung gestaffelten Drehachsen vorgesehen sein. Beispielsweise eignen sich Vorrichtungen mit senkrecht stehenden und in horizontaler Richtung gestaffelten Drehachsen zur Verwendung in Verbindung mit einem Fluid, wobei das Endloslaufmittel teilweise oder gänzlich im Fluid eingetaucht sein kann. Vorrichtungen mit waagerecht stehenden und in horizontaler Richtung gestaffelten Drehachsen sind ebenfalls zur Verwendung in einem Fluid geeignet, wobei auch hier das Endloslaufmittel nicht gänzlich innerhalb des Fluides angeordnet sein sondern nur teilweise in das Fluid eingetaucht sein kann. Entsprechendes gilt für die Verwendung von Vorrichtungen mit waagerecht stehenden und in vertikaler Richtung gestaffelten Drehachsen, also bei Vorrichtungen mit übereinanderstehenden Umlenkrollen, in Verbindung mit einem aus einer Höhe strömenden bzw. fallenden Fluid.

Nachfolgend wird die Erfindung anhang von bevorzugten Ausführungsbeispielen unter Zuhilfenahme von Figuren näher erläutert. Dabei zeigen:
- Figur 1: ein Endloslaufmittel;
- Figur 2a)-c): eine Vorrichtung mit einem Endloslaufmittel in unterschiedlichen Orientierungen des Endloslaufmittels;
- Figur 3: eine Vorrichtung mit Umlenkrollen unterschiedlichen Durchmessers;
- Figur 4: eine Vorrichtung mit mehr als zwei Umlenkrollen;
- Figur 5: eine Vorrichtung mit einem Endloslaufmittel mit mehreren Lastbügeln;
- Figur 6: ein Kettenglied;
- Figur 7: das Kettenglied der Figur 6 im Quer- und Längsschnitt;
- Figur 8: einen Teil eines kettenförmigen Endloslaufmittels mit mehreren Kettengliedern;
- Figur 9: einen Teil eines kettenförmigen Endloslaufmittels mit Lastbügel und Gewichtskörper;
- Figur 10: ein Kettenglied einschließlich Querschnitt des Kettengliedes;
- Figur 11: einen Lastbügel mit einem schaufelartigen Endabschnitt;
- Figur 12: eine Verwendung einer Vorrichtung mit horizontalen und in horizontaler Richtung gestaffelten Drehachsen.

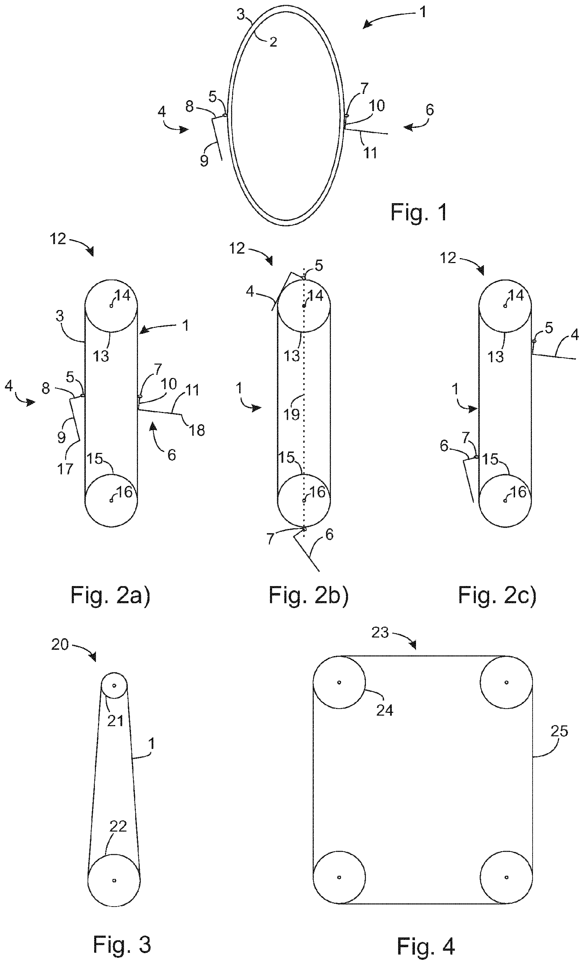

In der Figur 1 ist ein Endloslaufmittel 1 dargestellt. Das Endloslaufmittel 1 ist von einer geschlossenen Form mit einer Innenfläche oder Innenseite 2 und einer Außenfläche oder Außenseite 3. An der Außenseite 3 ist ein erster Lastbügel 4 an einer ersten Befestigungsposition 5 und ein zweiter Lastbügel 6 ist an einer zweiten Befestigungsposition 7 angelenkt. Sowohl in einer Richtung im Uhrzeigersinn in der Figur 1 als auch in einer Richtung gegen den Uhrzeigersinn ist das Endloslaufmittel 1 zwischen den Befestigungspositionen 5 und 7 dabei gleich lang, so dass sich die Lastbügel 4 und 6 auf einander gegenüberliegen Positionen befinden bzw. zueinander gegenüberliegend sind.

Lastbügel 4 weist einen ersten Schenkel 8 und einen zweiten Schenkel 9 auf, wobei der zweite Schenkel 9 länger ist als der erste Schenkel 8. Mit einem Endabschnitt ist der erste Schenkel 8 dabei an der ersten Befestigungsposition 5 angelenkt, während sich der zweite Schenkel 9 von einem dem angelenkten Endabschnitt endgegengesetzten Endabschnitt des ersten Schenkels 8 von diesem erstreckt. Der zweite Lastbügel 6 ist dementsprechend mit einem kürzeren ersten Schenkel 10 und einem längeren zweiten Schenkel 11 ausgebildet, wobei der erste Schenkel 10 mit einem Endabschnitt an der zweiten Befestigungsposition 7 an der Außenseite 3 des Endloslaufmittels 1 angelenkt ist während sich der zweite Schenkel 11 von einem diesem Endabschnitt entgegengesetzten Endabschnitt des ersten Schenkels 10 von diesem erstreckt. Infolge der angelenkten Befestigung der Lastbügel 4 und 6 an der Außenseite 3 sind dieselben in der Lage, wechselweise einen eingeklappten Zustand und einen ausgeklappten Zustand einzunehmen. In der Figur 1 befindet sich der erste Lastbügel 4 im eingeklappten Zustand und der zweite Lastbügel 6 befindet sich im ausgeklappten Zustand. Für beide Lastbügel 4 und 6 gilt jedoch, dass sich im eingeklappten Zustand deren jeweilige zweite Schenkel 9 und 11 in der Figur 1 gegen den Uhrzeigersinn von den jeweiligen ersten Schenkeln 8 und 10 erstrecken.

In der Figur 2a) ist nun eine Vorrichtung 12 zu sehen, die neben dem Endloslaufmittel 1 eine erste Umlenkrolle 13, die um eine in der Figur 2a) senkrecht zur Figurenebene stehende erste Drehachse 14, und eine zweite Umlenkrolle 15, die um eine ebenfalls senkrecht zur Figurenebene stehende zweite Drehachse 16, drehbar gelagert und vom Endloslaufmittel 1 umschlungen sind. Das Endloslaufmittel 1 steht dabei unter einer gewissen Spannung. Werden die Umlenkrollen 13 und 15 im Uhrzeigersinn um ihre jeweiligen Drehachsen 14 und 16 gedreht, so umläuft das Endloslaufmittel 1 beide Umlenkrollen 13 und 15 ebenfalls im Uhrzeigersinn. Bei Drehen der Umlenkrollen 13 und 15 gegen den Uhrzeigersinn werden dieselben von dem Endloslaufmittel 1 entsprechend gegen den Uhrzeigersinn umlaufen.

Wie in der Figur 2a) zu sehen ist, nehmen die beiden Lastbügel 4 und 6 hinsichtlich der Außenseite 3 des Endloslaufmittels 1 zwei verschiedene Zustände oder Positionen ein. Während sich der erste Lastbügel 4 im bereits erwähnten eingeklappten Zustand befindet, in welchem ein seinem ersten Schenkel 8 abgewandter Endabschnitt 17 seines zweiten Schenkels 9 der Außenseite 3 zugewandt ist, befindet sich der zweite Lastbügel 6 im ausgeklappten Zustand, in welchem sein erster Schenkel 10 an der Außenseite 3 anliegt und ein seinem ersten Schenkel 10 abgewandter Endabschnitt 18 seines zweiten Schenkels 11 von der Außenseite 3 abgewandt ist.

Bei Einwirken einer entsprechend gerichteten äußeren Kraft auf den ersten Lastbügel 4 kann dieser vom eingeklappten Zustand in den ausgeklappten Zustand überwechseln und umgekehrt. Entsprechend kann der zweite Lastbügel 6 bei Einwirken einer entsprechend gerichteten äußeren Kraft vom ausgeklappten Zustand in den eingeklappten Zustand überwechseln und umgekehrt. In der Figur 2a) ist eine Situation zu sehen, in der von oben nach unten wirkende Kräfte auf die Lastbügel 4 und 6 einwirken und infolgedessen der erste Lastbügel 4 den eingeklappten Zustand einnimmt und der zweite Lastbügel 6 den ausgeklappten Zustand. Diese äußeren Kräfte können beispielsweise durch ein in der Figur 2a) von oben nach unten fließendes Fluid oder die Gewichtskräfte der Lastbügel 4 und 6 bedingt sein.

Figur 2a) zeigt zudem eine Orientierung des Endloslaufmittels 1, in dem sich die erste Befestigungsposition 5 und die zweite Befestigungsposition 7 auf gleicher Höhe zwischen den Umlenkrollen 13 und 15 befinden. Beim Drehen des Endloslaufmittels 1 im Uhrzeigersinn führt die erste Befestigungsposition 5 eine Aufwärtsbewegung aus und die zweite Befestigungsposition 7 führt eine Abwärtsbewegung aus. Schließlich erreicht die erste Befestigungsposition 5 einen oberen Scheitelpunkt an der ersten Umlenkrolle 13. Zeitgleich erreicht die zweite Befestigungsposition 7 einen unteren Scheitelpunkt an der zweiten Umlenkrolle 15. Diese Scheitelpunkte liegen in einer durch die Drehachsen 14 und 16 aufgespannten oder definierten Ebene 19, die in der Figur 2b) gestrichelt dargestellt ist. Beim weiteren Drehen des Endloslaufmittels 1 wird die Ebene 19 von der ersten Befestigungsposition 5 in rechtsgerichteter Richtung durchstoßen und von der zweiten Befestigungsposition 7 in linksgerichteter Richtung durchstoßen. Diese Situation ist in der Figur 2b) dargestellt. Beim Durchstoßen der Ebene 19 durch die Befestigungspositionen 5 und 7 treten die Lastbügel 4 und 6 auf die jeweils andere Seite der Ebene 19 über. Nunmehr führen die an den Lastbügeln 4 und 6 angreifenden nach unten gerichteten äußeren Kräfte zu einem Zustandswechsel der Lastbügel 4 und 6. Während der erste Lastbügel 4 vom eingeklappten Zustand in den ausgeklappten Zustand übergeht, geht der zweite Lastbügel 6 vom ausgeklappten Zustand in den eingeklappten Zustand über. Anschließend bewegt sich die erste Befestigungsposition 5 nach unten und die zweite Befestigungsposition 7 bewegt sich nach oben, wie in der Figur 2c) zu sehen ist. Nach Erreichen der Scheitelpunkte wechseln die Befestigungspositionen 5 und 7 abermals die Seite bezüglich der Ebene 19 und bei Fortfahren der Bewegung des Endloslaufmittels 1 wird schließlich die in der Figur 2a) dargestellte Situation wieder erreicht. Der gesamte beschriebene Vorgang wiederholt sich daraufhin beliebig oft.

Vorteilhafterweise weist das Endloslaufmittel 1 nicht nur zwei Laufbügel auf. So ist bei vielen Ausführungsformen eine Mehrzahl an Laufbügeln entlang des Endloslaufmittels 1 verteilt angeordnet. Damit ist gewährleistet, dass sich stets Laufbügel beiderseits der Drehachsen 14, 16 der Umlenkrollen 13, 15 befinden, auch wenn zwei der Laufbügel gerade im Begriff sind, die von den Drehachsen 14, 16 aufgespannte Ebene 19 zu durchstoßen.

In der Vorrichtung 12 der Figuren 2a)-2c) haben die erste Umlenkrolle 13 und die zweite Umlenkrolle 15 jeweils gleiche Durchmesser. Bei anderen Vorrichtungen können die Umlenkrollen jedoch auch unterschiedliche Durchmesser aufweisen. So zeigt die Figur 3 eine Vorrichtung 20 mit einer ersten Umlenkrolle 21 und einer zweiten Umlenkrolle 22, wobei die erste Umlenkrolle 21 einen kleineren Durchmesser aufweist als die zweite Umlenkrolle 22.

Ferner ist die Zahl der Umlenkrollen bei derartigen Vorrichtungen nicht auf zwei beschränkt. Beispielsweise ist in der Figur 4 eine Ausführungsform einer Vorrichtung 23 mit vier an den Ecken eines Quaders angeordneten Umlenkrollen 24 zu sehen, um welche ein Endloslaufmittel 25 geschlungen ist. Dabei weist das Endloslaufmittel 25 nicht nur zwei Lastbügel auf sondern ist mit einer Vielzahl entlang des Endloslaufmittels 25 gleichmäßig verteilten Lastbügeln versehen, die in der Figur 4 aus Gründen der Übersichtlichkeit jedoch nicht dargestellt sind.

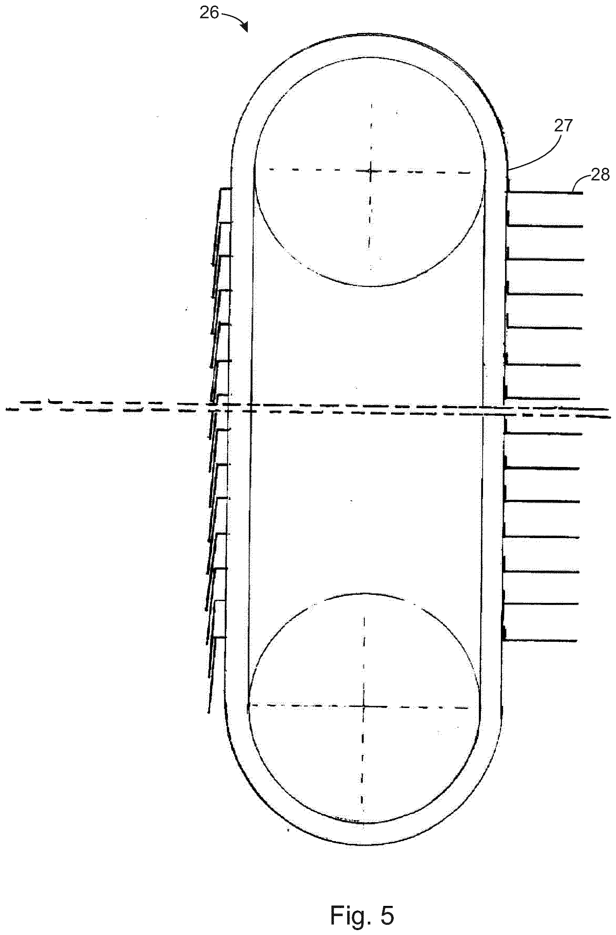

Eine Vorrichtung 26 mit einem um zwei Umlenkrollen geschlungenen Endloslaufmittel 27, das ebenfalls eine Vielzahl von entlang des Endloslaufmittels 27 verteilten Laufbügeln 28 aufweist, ist in der Figur 5 zu sehen. Wie in der Figur 5 erkennbar ist, nehmen infolge äußerer angreifender Kräfte alle Lastbügel 28, die sich auf der linken Seite der Vorrichtung 26 befinden, den eingeklappten Zustand ein, während alle Lastbügel 28, die sich auf der rechten Seite der Vorrichtung 26 befinden, den ausgeklappten Zustand einnehmen. Zweite Schenkel der sich im ausgeklappten Zustand befindlichen Lastbügel 28 sind dabei senkrecht oder rechtwinklig zur Außenfläche des Endloslaufmittels 27 orientiert.

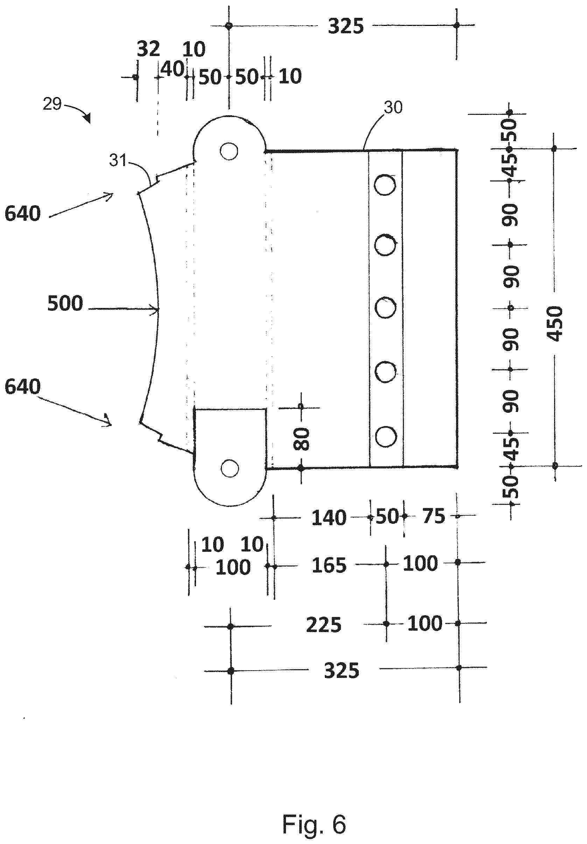

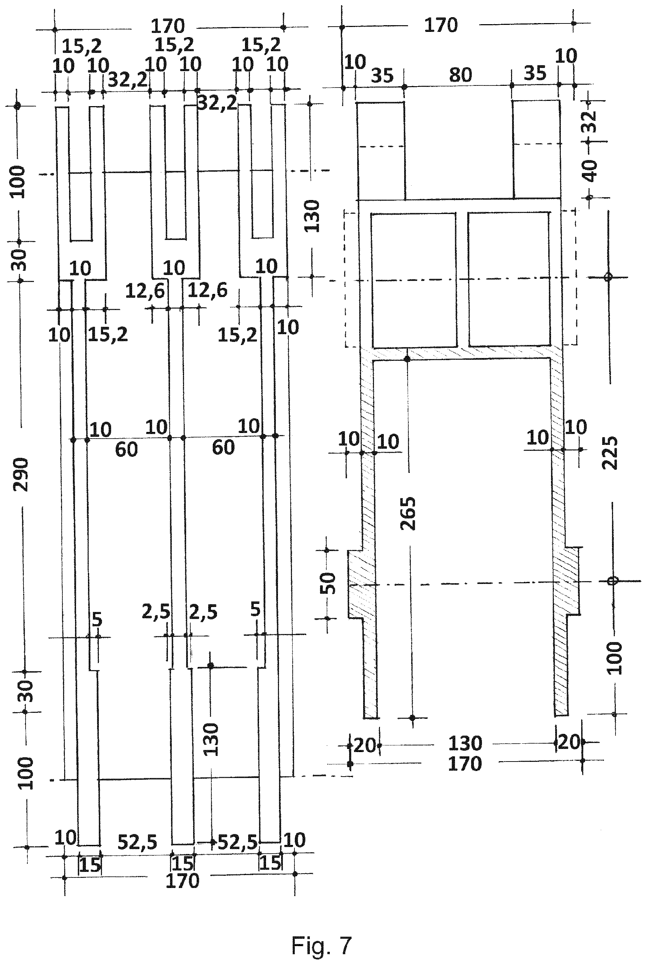

In der Figur 6 ist ein besonders bevorzugtes Kettenglied 29 für ein Endloslaufmittel mit Maßangaben dargestellt. Ferner zeigt die Figur 7 das Kettenglied 29 im Quer- und Längsschnitt. Das Kettenglied 29 weist im Wesentlichen einen quaderförmigen Endabschnitt 30, der insbesondere auch quadratisch sein kann, sowie einen Endabschnitt 31 mit einer runden Ausnehmung auf, mit der das Endloslaufmittel an Umlenkrollen zur Anlage kommt und die in einem Endloslaufmittel einen Teil von dessen Innenseite oder Innenfläche bildet.

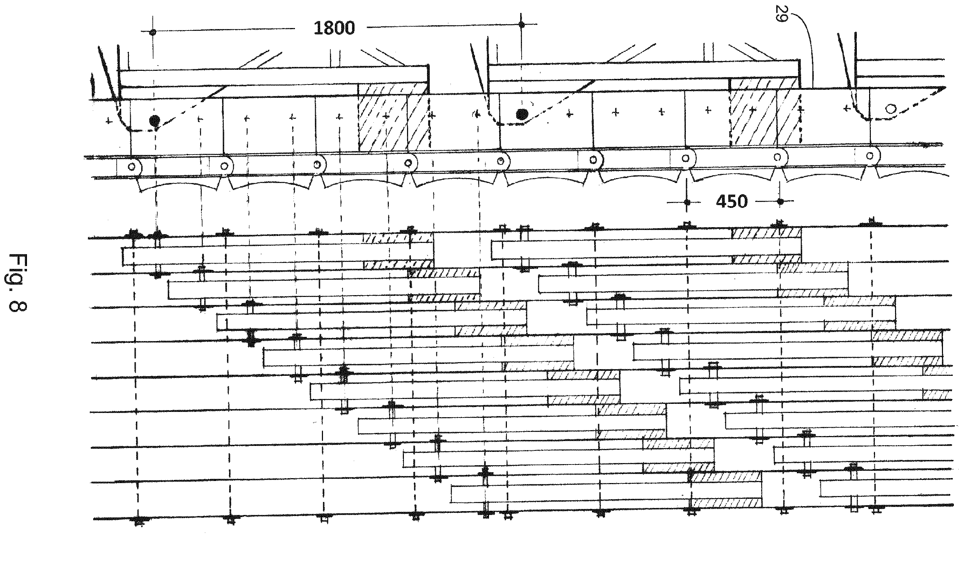

Figur 8 zeigt einen Teil eines kettenförmigen Endloslaufmittels, das aus mehreren miteinander verbundenen Kettengliedern 29 gemäß den Figuren 6 und 7 aufgebaut ist. Hierbei wurde ein Lastbügelabstand von 1,80 m verwendet. Diese Länge stellt ein Kettenteil mit vier Kettengliedern mit 0,45 m Einzellänge dar. Um die Lastbügel in kürzerem Abstand montieren zu können, werden diese in einer seitlichen Spur montiert. Der Lastbügelabstand wird dann von den Anschlussmöglichkeiten am Kettenglied 29 vorgegeben. Zur besseren Darstellung werden in der Figur 8 nur zwei Anschlussmöglichkeiten verwendet. Durch das seitliche Versetzen der Lastbügel ergibt sich eine stufenförmige Anordnung, die unbegrenzt fortgeführt werden kann.

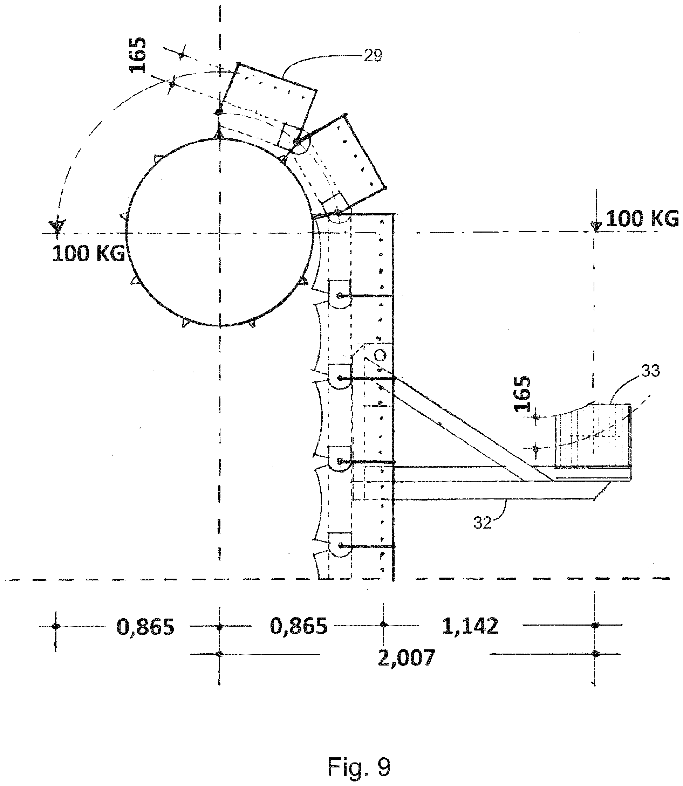

Sofern Gewichtskräfte als äußere Kräfte an den Lastbügeln angreifen, können diese mit einem zusätzlichen Gewicht ausgebildet sein, um die Gewichtskräfte zu vergrößern. Figur 9 zeigt hierzu einen Lastbügel 32 eines kettenförmigen Endloslaufmittels, das aus mehreren miteinander verbundenen Kettengliedern 29 gemäß den Figuren 6 und 7 aufgebaut ist. Wie in der Figur 9 zu sehen ist, ist ein Gewichtskörper 33 an einem Endabschnitt des Lastbügels 32 angeordnet. Dank des Gewichtskörpers 33 wird die Wirkung der Schwerkraft als externer Kraft auf den Lastbügel 32 und damit auf das Endloslaufmittel vergrößert.

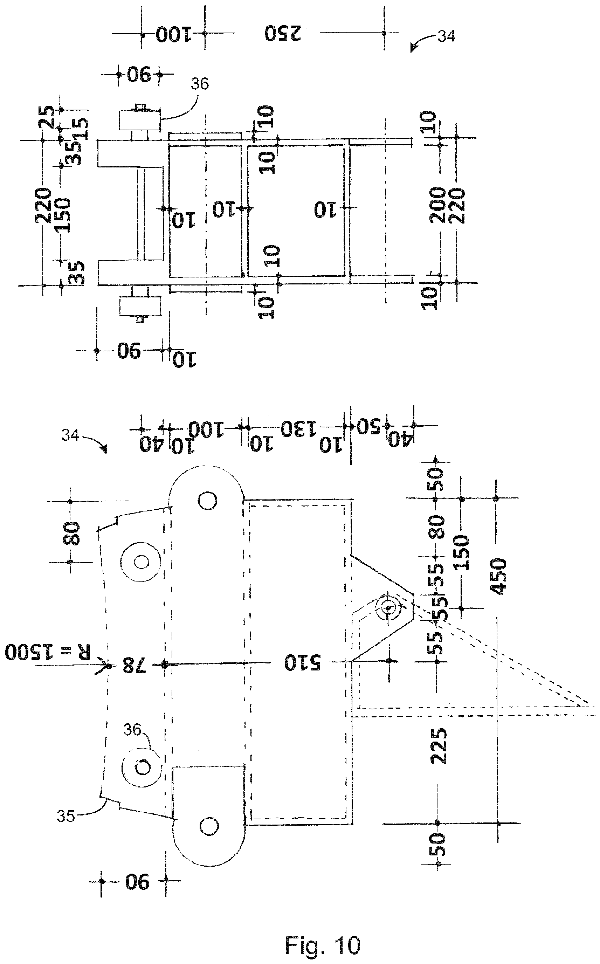

In der Figur 10 ist eine Kettenglied 34 einschließlich einem Querschnitt durch dasselbe zu sehen, das für die Verwendung einer Vorrichtung in Verbindung mit einem fließenden Fluid vorgesehen ist, wobei Drehachsen der Umlenkrollen der Vorrichtung horizontal orientiert und in horizontaler Richtung gestaffelt sind. Hierbei ist ein geschlossener Hohlraum ausgebildet, der dazu dient, das Eigengewicht des Kettengliedes 34 im Fluid, beispielsweise Wasser, zu verringern und eine Biegesteifigkeit des Endloslaufmittels zu erhöhen. An einem Endabschnitt 35 des Kettengliedes 34, der eine runde Ausnehmung aufweist, sind zwei Rollen 36 angebracht. Diese Rollen 36 sind dazu vorgesehen, in Führungsschienen zu gleiten, welche eine Durchbiegung des Endloslaufmittels bei deren Bewegung verhindern. Dadurch wird eine Zugspannung an den vom Endloslaufmittel umschlungenen Umlenkrollen vermieden, die durch eine große Durchbiegung am Endloslaufmittel entstehen würde.

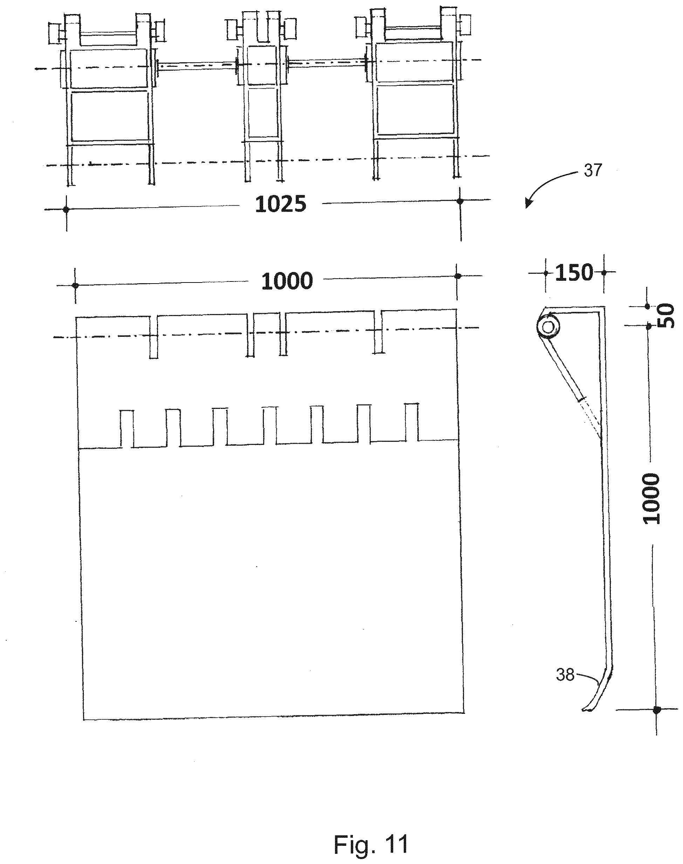

Um einem Fluid eine größere Angriffs- oder Wirkungsfläche zu bieten, können die Lastbügel wie der in der Figur 11 dargestellte Lastbügel 37 mit einem schaufelartigen Endabschnitt 38 ausgestattet sein. Infolge dieses Endabschnitts 38, der beispielsweise als Vertiefung ausgebildet sin kann, kann die infolge des Fluids auf den Lastbügel 37 ausgeübte Kraft effektiver an demselben angreifen.

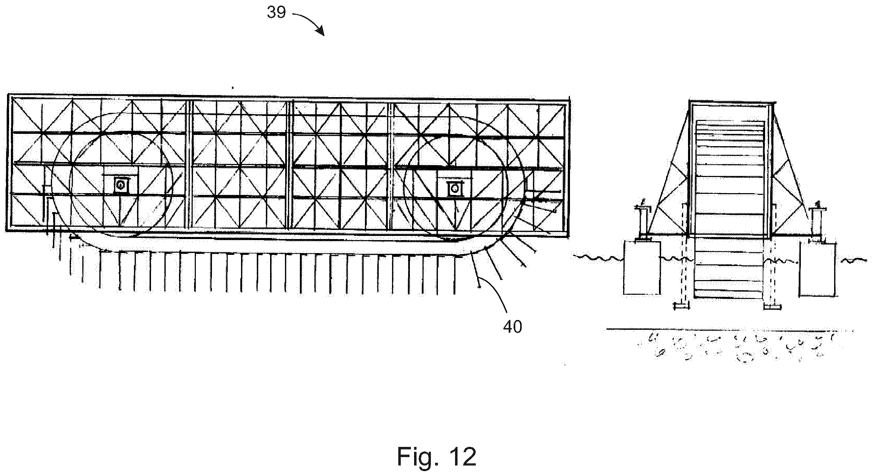

Eine Verwendung einer Vorrichtung 39 in einem fließenden Fluid, bei der Drehachsen der Umlenkrollen horizontal orientiert und in horizontaler Richtung gestaffelt sind, ist in der Figur 12 zu sehen. Dabei ist die Vorrichtung 39 einmal in der Seitenansicht und einmal in der Vorderansicht dargestellt, wobei die Vorrichtung 39 teilweise in das Fluid, bei dem es sich um Wasser handelt, eingetaucht ist. Infolge des Wasserflusses werden in das Wasser eintauchende Lastbügel 40 der Vorrichtung 39 in den ausgeklappten Zustand überführt, während die sich auf der dem Wasser entgegengesetzten Seite der Vorrichtung 39 befindlichen Lastbügel 40 aufgrund der Gewichtskraft im eingeklappten Zustand befinden.

### Bezugszeichenliste

- 1.: Endloslaufmittel
- 2.: Innenseite
- 3.: Außenseite
- 4.: Lastbügel
- 5.: Befestigungsposition
- 6.: Lastbügel
- 7.: Befestigungsposition
- 8.: erster Schenkel
- 9.: zweiter Schenkel
- 10.: erster Schenkel
- 11.: zweiter Schenkel
- 12.: Vorrichtung
- 13.: Umlenkrolle
- 14.: Drehachse
- 15.: Umlenkrolle
- 16.: Drehachse
- 17.: Endabschnitt
- 18.: Endabschnitt
- 19.: Ebene
- 20.: Vorrichtung
- 21.: Umlenkrolle
- 22.: Umlenkrolle
- 23.: Vorrichtung
- 24.: Umlenkrolle
- 25.: Endloslaufmittel
- 26.: Vorrichtung
- 27.: Endloslaufmittel
- 28.: Lastbügel
- 29.: Kettenglied
- 30.: quaderförmiger Endabschnitt
- 31.: Endabschnitt mit Ausnehmung
- 32.: Lastbügel
- 33.: Gewichtskörper
- 34.: Kettenglied
- 35.: Endabschnitt
- 36.: Rolle
- 37.: Lastbügel
- 38.: schaufelartiger Endabschnitt
- 39.: Vorrichtung
- 40.: Lastbügel

## Patentansprüche

1. Endloslaufmittel (1, 25, 27) mit einer Innenseite (2) und einer Außenseite (3), das um zwei um jeweilige voneinander beabstandete und zueinander im Wesentlichen parallel ausgerichtete Drehachsen (14, 16) drehbar gelagerte Umlenkrollen (13, 15, 21, 22, 24) schlingbar ist, wobei jeweilige gekrümmte Teilabschnitte des Endloslaufmittels (1, 25, 27) mit der Innenseite (2) an Umfangsflächen der Umlenkrollen (13, 15, 21, 22, 24) anliegen und das Endloslaufmittel (1, 25, 27) bei Drehen der Umlenkrollen (13, 15, 21, 22, 24) im selben Drehsinn die Umlenkrollen (13, 15, 21, 22, 24) umläuft, und
das ferner wenigstens zwei Lastbügel (4, 6, 28, 32, 37, 40) aufweist, von denen jeder jeweils einen kürzeren ersten Schenkel (8, 10) mit einem an der Außenseite (3) an einer jeweiligen Befestigungsposition (5, 7) angelenkten ersten Ende und einem jeweiligen dem ersten Ende endgegengesetzten zweiten Ende sowie einen sich vom zweiten Ende erstreckenden und mit dem ersten Schenkel (8, 10) einen jeweiligen Winkel einschließenden jeweiligen längeren zweiten Schenkel (9, 11) aufweist und die dazu eingerichtet sind,
bei Einwirken äußerer Kräfte wechselweise einen eingeklappten Zustand, in welchem ein vom ersten Schenkel (8, 10) abgewandter Endabschnitt (17, 18) des zweiten Schenkels (9, 11) der Außenseite (3) zugewandt ist, und einen ausgeklappten Zustand einzunehmen, in welchem der Endabschnitt (17, 18) von der Außenseite (3) abgewandt ist, wobei sich die zweiten Schenkel (9, 11) beider Lastbügel (4, 6, 28, 32, 37, 40) im eingeklappten Zustand bezüglich eines vorgegebenen Umlaufsinns entlang des Endloslaufmittels (1, 25, 27) in gleicher Richtung vom ersten Schenkel (8, 10) aus erstrecken und das Endloslaufmittel (1, 25, 27) zwischen den Befestigungspositionen (5, 7) der Lastbügel (4, 6, 28, 32, 37, 40) sowohl im Umlaufsinn als auch gegen den Umlaufsinn im Wesentlichen gleich lang ist.

2. Endloslaufmittel (1, 25, 27) nach Anspruch 1, wobei es sich bei dem Endloslaufmittel (1, 25, 27) um eine Endloskette mit mehreren Kettengliedern (29, 34) oder um einen Endlosriemen oder um ein flaches Endlosband handelt.

3. Endloslaufmittel (1, 25, 27) nach Anspruch 2 mit Kettengliedern (29, 34), die einen quaderförmigen Endabschnitt (30) sowie einen Endabschnitt (31, 35) mit einer runden Ausnehmung aufweisen, deren Fläche einen Teilabschnitt der Innenseite (2) bildet.

4. Endloslaufmittel (1, 25, 27) nach einem der vorhergehenden Ansprüche, bei dem wenigstens einer der vom ersten Schenkel (8, 10) abgewandten Endabschnitte (17, 18) des zweiten Schenkels (9, 11) schaufelartig ausgebildet ist und/oder bei dem wenigstens einer der Endabschnitte (17, 18) mit wenigstens einem Gewichtskörper (33) versehen ist.

5. Vorrichtung (12, 20, 23, 26, 39) mit wenigstens einem Endloslaufmittel (1, 25, 27) nach einem der vorhergehenden Ansprüche und wenigstens zwei Umlenkrollen (13, 15, 21, 22, 24), um welche das Endloslaufmittel (1, 25, 27) geschlungen ist.

6. Vorrichtung (12, 20, 23, 26, 39) nach Anspruch 5, bei der wenigstens zwei oder mehrere Endloslaufmittel (1, 25, 27) entlang der Drehachsen (14, 16) gestaffelt um die Umlenkrollen (13, 15, 21, 22, 24) geschlungen sind, wobei sich die zweiten Schenkel (9, 11) aller Lastbügel (4, 6, 28, 32, 37, 40) aller Endloslaufmittel (1, 25, 27) im eingeklappten Zustand bezüglich desselben vorgegebenen Umlaufsinns in gleicher Richtung erstrecken.

7. Vorrichtung (12, 20, 23, 26, 39) nach einem der Ansprüche 5 oder 6, die wenigstens ein Brems- oder Steuermittel aufweist, das zum Bremsen oder Steuern einer Bewegung der Umlenkrollen (13, 15, 21, 22, 24) und/oder des Endloslaufmittels (1, 25, 27) eingerichtet ist.

8. Vorrichtung (12, 20, 23, 26, 39) nach einem der Ansprüche 5 bis 7, bei der wenigstens zwei Umlenkrollen (13, 15, 21, 22, 24) gleiche oder unterschiedliche Durchmesser aufweisen.

9. Verwendung wenigstens einer Vorrichtung (12, 20, 23, 26, 39) nach einem der Ansprüche 5 bis 8, bei der gleichgerichtete äußere Kräfte an den zweiten Schenkeln (9, 11) angreifen und das Endloslaufmittel (1, 25, 27) sowie die Umlenkrollen (13, 15, 21, 22, 24) in Bewegung versetzen, wobei diese Bewegung oder Energie von der Vorrichtung (12, 20, 23, 26, 39) abgeführt wird.

10. Verwendung nach Anspruch 9, bei der die Vorrichtung (12, 20, 23, 26, 39) in einer Anordnung mit im Wesentlichen senkrecht oder waagerecht stehenden und in horizontaler oder in vertikaler Richtung gestaffelten Drehachsen (14, 16) vorgesehen wird.

## Claims

1. A endless running means (1, 25, 27) having an inner side (2) and an outer side (3), which can be looped around two deflection rollers (13, 15, 21, 22, 24) rotatably mounted about respective axes of rotation (14, 16) spaced apart from one another and aligned substantially parallel to one another, wherein respective curved partial sections of the endless running means (1, 25, 27) abut with the inner side (2) against circumferential surfaces of the deflection rollers (13, 15, 21, 22, 24) and the endless running means (1, 25, 27) circulates around the deflection rollers (13, 15, 21, 22, 24) when the deflection rollers (13, 15, 21, 22, 24) rotate in the same direction of rotation, and
which furthermore has at least two load brackets (4, 6, 28, 32, 37, 40), of which each in each case has a shorter first leg (8, 10) with a first end articulated on the outer side (3) at a respective fastening position (5, 7) and a respective second end opposite the first end and a respective longer second leg (9, 11) extending from the second end and enclosing a respective angle with the first leg (8, 10) and which are set up,
upon the action of external forces, to assume alternately a folded-in state, in which an end section (17, 18) of the second leg (9, 11) facing away from the first leg (8, 10) faces the outer side (3), and a folded-out state, in which the end section (17, 18) is facing away from the outer side (3), wherein the second legs (9, 11) of both load brackets (4, 6, 28, 32, 37,40) extend with respect to a predetermined direction of circulation along the endless running means (1, 25, 27) in the same direction from the first leg (8, 10) and the endless running means (1, 25, 27) between the fastening positions (5, 7) of the load brackets (4, 6, 28, 32, 37, 40) are substantially the same length both in the direction of circulation as well as against the direction of circulation.

2. The endless running means (1, 25, 27) according to claim 1, wherein the endless running means (1, 25, 27) is an endless chain having a plurality of chain members (29, 34) or an endless belt or a flat endless band.

3. The endless running means (1, 25, 27) according to claim 2 having chain members (29, 34), which have a cuboid end section (30) and an end section (31, 35) having a round recess, the surface area of which forms a partial section of the inner side (2).

4. The endless running means (1, 25, 27) according to any one of the preceding claims, in which at least one of the end sections (17, 18) of the second leg (9, 11) facing away from the first leg (8, 10) is designed like a shovel and/or in which at least one of the end sections (17, 18) is provided with at least one weight body (33).

5. An apparatus (12, 20, 23, 26, 39) having at least one endless running means (1, 25, 27) according to any one of the preceding claims and at least two deflection rollers (13, 15, 21, 22, 24), around which the endless running means (1, 25, 27) is looped.

6. The apparatus (12, 20, 23, 26, 39) according to claim 5, in which at least two or several endless running means (1, 25, 27) are looped, staggered along the axes of rotation (14, 16), around the deflection rollers (13, 15, 21, 22, 24), wherein the second leg (9, 11) of all load brackets (4, 6, 28, 32, 37, 40) of all endless running means (1, 25, 27) extend in the folded-in state with respect to the same predetermined direction of circulation in the same direction.

7. The apparatus (12, 20, 23, 26, 39) according to any one of claims 5 or 6, which has at least one braking or control means, which is set up for braking or controlling a movement of the deflection rollers (13, 15, 21, 22, 24) and/or of the endless running means (1, 25, 27).

8. The apparatus (12, 20, 23, 26, 39) according to any one of claims 5 to 7, in which at least two deflection rollers (13, 15, 21, 22, 24) have the same or different diameters.

9. A use at least of one apparatus (12, 20, 23, 26, 39) according to any one of claims 5 to 8, in which equidirectional external forces engage with the second legs (9, 11) and set the endless running means (1, 25, 27) and the deflection rollers (13, 15, 21, 22, 24) in motion, wherein said movement or energy is dissipated by the apparatus (12, 20, 23, 26, 39).

10. The use according to claim 9, in which the apparatus (12, 20, 23, 26, 39) is provided in an arrangement with substantially perpendicular or horizontal axes of rotation (14, 16) that are staggered in the horizontal or in the vertical direction.

## Revendications

1. Organe mobile sans fin (1, 25, 27) avec une face interne (2) et une face externe (3), qui peut être enroulé autour de poulies de renvoi (13, 15, 21, 22, 24) tournant autour d'axes de rotation (14, 16) distants entre eux et globalement parallèles entre eux, dans lequel les portions incurvées respectives de l'organe mobile sans fin (1, 25, 27) s'appuient, avec la face interne (2), contre des surfaces circonférentielles des poulies de renvoi (13, 15, 21, 22, 24) et l'organe mobile sans fin (1, 25, 27) circule, lors de la rotation des poulies de renvoi (13, 15, 21, 22, 24) dans le même sens de rotation que les poulies de renvoi (13, 15, 21, 22, 24) et
qui comprend en outre au moins deux étriers de charge (4, 6, 28, 32, 37, 40) dont chacun présente respectivement une première branche plus courte (8, 10) avec une première extrémité articulée par rapport à la face externe (3), au niveau d'une position de fixation (5, 7) respective, et une deuxième extrémité opposée respectivement à la première extrémité ainsi qu'une deuxième branche plus longue (9, 11) s'étendant à partir de la deuxième extrémité et formant, avec la première branche (8, 10), un angle respectif et qui sont conçus
pour adopter, lors de l'application de forces extérieures, alternativement un état replié, dans lequel une portion d'extrémité (17, 18), opposée à la première branche (8, 10), de la deuxième branche (9, 11) est orientée vers la face externe (3) et un état déplié dans lequel la portion d'extrémité (17, 18) est opposée à la face externe (3), dans lequel les deuxièmes branches (9, 11) des deux étriers de charge (4, 6, 28, 32, 37, 40) s'étendent, dans l'état replié, par rapport à un sens de rotation prédéterminé le long de l'organe mobile sans fin (1, 25, 27), dans la même direction à partir de la première branche (8, 10) et l'organe mobile sans fin (1, 25, 27) présente globalement la même longueur entre les positions de fixation (5, 7) des étriers de charge (4, 6, 28, 32, 37, 40) aussi bien dans le sens de rotation que dans le sens opposé au sens de rotation.

2. Organe mobile sans fin (1, 25, 27) selon la revendication 1, dans lequel l'organe mobile sans fin (1, 25, 27) est une chaîne sans fin avec plusieurs maillons (29, 34) ou une courroie sans fin ou une bande plate sans fin.

3. Organe mobile sans fin (1, 25, 27) selon la revendication 2 avec des maillons (29, 34) qui présentent une portion d'extrémité parallélépipédique (30) ainsi qu'une portion d'extrémité (31, 35) avec un évidement rond, dont la surface constitue une partie de la face interne (2).

4. Organe mobile sans fin (1, 25, 27) selon l'une des revendications précédentes, dans lequel au moins une des portions d'extrémité (17, 18), opposée à la première branche (8, 10), de la deuxième branche (9, 11) est conçu sous la forme d'une pelle et/ou dans lequel au moins une des portions d'extrémité (17, 18) est munie d'au moins un poids (33).

5. Dispositif (12, 20, 23, 26, 39) avec au moins un organe mobile sans fin (1, 25, 27) selon l'une des revendications précédentes et au moins deux poulies de renvoi (13, 15, 21, 22, 24), autour desquelles l'organe mobile sans fin (1, 25, 27) est enroulé.

6. Dispositif (12, 20, 23, 26, 39) selon la revendication 5, dans lequel au moins deux organes mobiles sans fin (1, 25, 27) ou plus sont enroulés autour des poulies de renvoi (13, 15, 21, 22, 24) de manière échelonnée le long des axes de rotation (14, 16), dans lequel les deuxièmes branches (9, 11) de tous les étriers de charge (4, 6, 28, 32, 37, 40) de tous les organes mobiles sans fin (1, 25, 27) s'étendent, dans l'état replié dans la même direction par rapport au même sens de rotation prédéterminé.

7. Dispositif (12, 20, 23, 26, 39) selon l'une des revendications 5 ou 6, qui comprend au moins un moyen de freinage ou de contrôle, qui est conçu pour le freinage ou le contrôle d'un déplacement des poulies de renvoi (13, 15, 21, 22, 24) et/ou de l'organe mobile sans fin (1, 25, 27).

8. Dispositif (12, 20, 23, 26, 39) selon l'une des revendications 5 à 7, dans lequel au moins deux poulies de renvoi (13, 15, 21, 22, 24) présentent des diamètres égaux ou différents.

9. Utilisation d'au moins un dispositif (12, 20, 23, 26, 39) selon l'une des revendications 5 à 8, dans laquelle des forces extérieures de même orientation s'appliquent sur les deuxièmes branches (9, 11) et mettent en mouvement l'organe mobile sans fin (1, 25, 27) ainsi que les poulies de renvoi (13, 15, 21, 22, 24), dans lequel ce mouvement ou de l'énergie est évacué du dispositif (12, 20, 23, 26, 39).

10. Utilisation selon la revendication 9, dans lequel le dispositif (12, 20, 23, 26, 39) est prévu dans une disposition avec des axes de rotation (14, 16) verticaux ou horizontaux ou échelonnés dans la direction horizontale ou verticale.
